# FASCICULE DE BREVET EUROPEEN

(11) **EP 4 045 953 B1**
(45) Date de publication et mention de la délivrance du brevet: **26.08.2026**
(21) Numéro de dépôt: 20801345.8
(22) Date de dépôt: 14.10.2020
(51) Int. Cl.: G02B 6/06, G02B 6/44

(54) **FAISCEAU DE FIBRES OPTIQUES**
GLASFASERKABELBÜNDEL
OPTICAL FIBER BUNDLE

(30) Priorité: 14.10.2019 FR 1911426
(43) Date de publication de la demande: 24.08.2022
(73) Titulaire: ACOME, 75014 Paris (FR)
(72) Inventeur: LALLINEC, Patrice, 50610 JULLOUVILLE (FR); MAURAY, Stephane, 50140 MORTAIN BOCAGE (FR)
(74) Mandataire: Regimbeau
(86) Numéro de dépôt international: PCT/FR2020/051824
(87) Numéro de publication internationale: WO 2021/074529

(56) Documents cités:
- EP-B1- 3 168 665
- FR-A1- 3 007 042
- US-A- 4 956 039
- US-A1- 2003 091 307
- US-A1- 2019 302 384
- ANONYMOUS: "Units of textile measurement", 25 September 2019 (2019-09-25), XP055765080, Retrieved from the Internet <URL:https://en.wikipedia.org/wiki/Units_of_textile_measurement> [retrieved on 20210114]

## Description

### DOMAINE DE L'INVENTION

La présente invention concerne un faisceau de fibres optiques, et un procédé pour obtenir un tel faisceau.

### ETAT DE LA TECHNIQUE

On connaît de l'état de la technique un faisceau de fibres optiques comprenant au moins trois fibres optiques agencées de manière non coplanaire pour former ensemble un fagot, et au moins un fil entourant le fagot pour maintenir les fibres optiques les unes par rapport aux autres. Un tel faisceau de fibres est notamment décrit dans le document US2019302384.

Pour obtenir un tel faisceau, un dispositif de guidage de fil est mis en rotation autour d'un axe, par rapport au fagot, de sorte à enrouler le fil autour du fagot.

Pour augmenter la vitesse d'obtention d'un tel faisceau, on peut augmenter la vitesse de rotation de l'élément de guidage autour du fagot.

Or, en augmentant cette vitesse, le dispositif de guidage et le fil subissent une force centrifuge trop forte qui génère des tensions élevées faisant obstacle à un enroulement précis du fil sur le fagot de fibres optiques.

### EXPOSE DE L'INVENTION

Un but est d'obtenir de façon plus rapide un faisceau de fibres optiques autour desquelles un fil est enroulé pour les maintenir en forme de fagot, sans pour autant que l'enroulement ne perde en précision.

Il est à cet effet proposé, selon un premier aspect, un faisceau de fibres optiques conforme à la revendication 1.

Le fait de réduire la masse linéique du fil a pour effet de rendre ce fil moins sensible à la force centrifuge. Par conséquent, il peut être enroulé de manière précise et à une vitesse très élevée autour du fagot de fibres optiques.

Le faisceau selon le premier aspect peut également comprendre les caractéristiques énoncées dans les revendications dépendantes.

Avantageusement, un câble de communication optique comprend le faisceau de fibres optiques selon le premier aspect.

Il est également proposé, selon un deuxième aspect, un procédé d'obtention d'un faisceau conforme au premier aspect. Ce procédé comprend une mise en rotation d'un dispositif de guidage de fil par rapport au fagot de fibres optiques, de sorte à enrouler le fil autour du fagot à une vitesse de rotation allant de 6000 tours par minute à 10000 tours par minute.

Le fagot de fibres optiques peut en outre être déplacé en translation le long d'un axe par rapport au dispositif de guidage de fil, à une vitesse allant de 60 à 150 mètres par minutes, pendant que le dispositif de guidage tourne par rapport au fagot autour de l'axe.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 est une vue en perspective d'un faisceau de fibres selon un mode de réalisation.
La figure 2 est une vue en perspective de côté d'un faisceau de fibres selon un autre mode de réalisation.
La figure 3 est une représentation schématique d'un dispositif utilisable pour obtenir un faisceau de fibres optiques.

Sur l'ensemble des figures, les éléments similaires portent des références identiques. Les figures ne sont pas à l'échelle.

### DESCRIPTION DETAILLEE D'AU MOINS UN MODE DE REALISATION

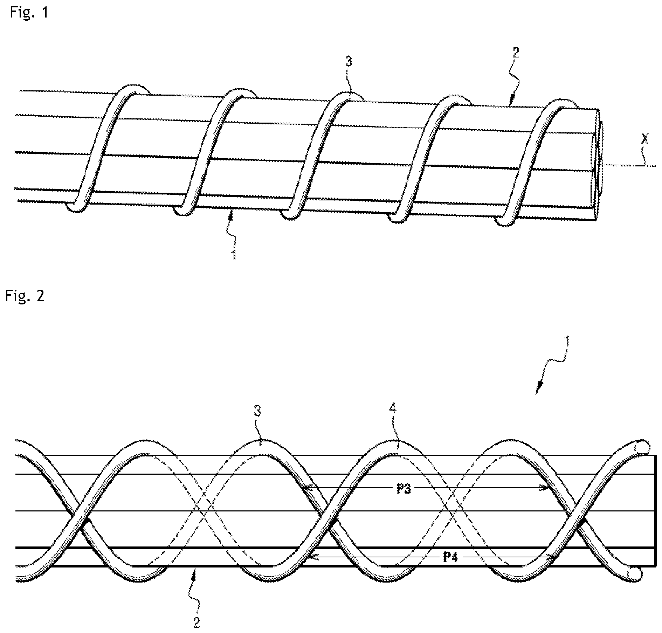

En référence aux **figures 1 et 2****,** un faisceau de fibres optiques 1 comprend au moins trois fibres optiques 2 agencées de manière non coplanaire pour former ensemble un fagot. Dans l'exemple illustré sur la figure 1, les fibres optiques sont au nombre de 7.

Les fibres optiques 2 sont parallèles à un axe longitudinal X.

Le faisceau 1 comprend par ailleurs un premier fil 3 entourant le fagot pour maintenir les fibres optiques 2 les unes par rapport aux autres.

Le premier fil 3 présente une masse linéique strictement inférieure à 11 tex. Préférentiellement, cette masse linéique est inférieure ou égale à 10 tex, voire inférieure à 9 tex, voire inférieure à 8 tex, voire inférieure à 7 tex, voir inférieure à 6 tex.

Le premier fil 3 comprend une pluralité de filaments non-torsadés. Une telle configuration permet au premier fil d'être écrasé latéralement, si bien que sa section peut passer de globalement circulaire à une section aplatie.

Le premier fil 3 a une résistance à la rupture d'au moins 0,9 Newton.

Le premier fil 3 est réalisé dans l'un des matériaux suivants, ou être une combinaison de tels matériaux : polyamide (PA), polypropylène (PP), polyester, coton, aramide, paraaramide.

Le premier fil 3 est agencé de sorte à s'étendre de manière hélicoïdale autour du fagot de fibres.

Le premier fil 3 est enroulé autour du fagot avec un pas d'enroulement P3 inférieur ou égal à 30 millimètres, de préférence inférieur ou égal à 15 millimètres. Le pas d'enroulement d'un fil est défini dans le présent texte comme la distance, mesurée parallèlement à l'axe longitudinal X, que met le premier fil pour faire un tour complet autour de l'axe X.

Ce pas d'enroulement est supérieur ou égal à 2 millimètres.

Le premier fil 3 est enroulé autour du fagot selon une rotation en S.

Le faisceau 1 comprend par ailleurs un deuxième fil 4 entourant le fagot pour maintenir les fibres optiques 2 les unes par rapport aux autres (le fil 4 est illustré sur la figure 2 mais pas sur la figure 1).

Le deuxième fil 4 présente les mêmes caractéristiques intrinsèques que le premier fil.

Tout comme le premier fil 3, le deuxième fil 4 est agencé de sorte à s'étendre de manière hélicoïdale autour du fagot de fibres optiques 2.

L'agencement du deuxième fil 4 par rapport au fagot est similaire à l'agencement du premier fil 3, à la différence près que le deuxième fil est enroulé autour du fagot selon une rotation en Z. Autrement dit, les deux fils 3, 4 sont enroulés selon deux sens d'enroulement différents, si bien que ces deux fils 3, 4 se croisent ponctuellement le long du faisceau 1.

De préférence, le pas d'enroulement P4 du deuxième fil 4 est égal au pas d'enroulement P3 du premier fil 3. Une telle configuration est de nature à faciliter l'accessibilité aux fibres optiques 2 sur une distance d'environ un mètre par repoussement des fils 3, 4.

Un tel faisceau 1 de fibres optiques est avantageusement inclus dans un câble de communication optique.

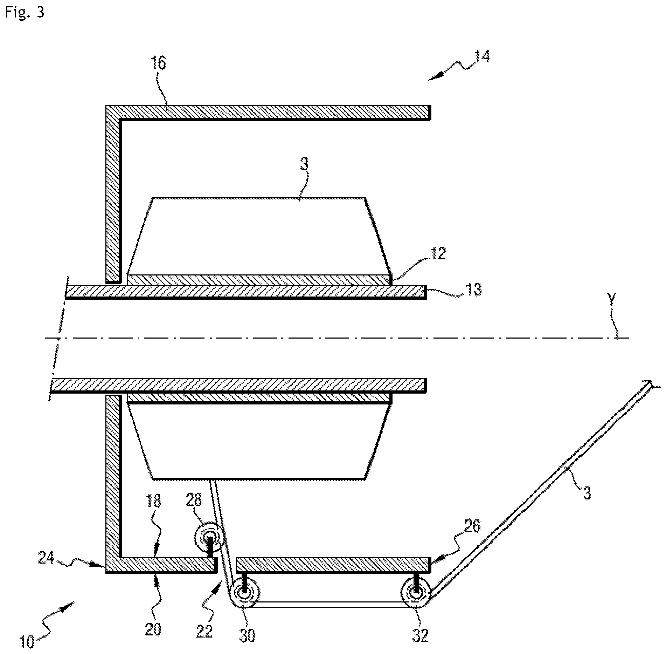

On a représenté en **figure 3** un dispositif de guirlandage 10 pour obtenir le faisceau 1 discuté précédemment.

Le dispositif de guirlandage 10 comprend un support 12, également appelé fût dans la littérature, autour duquel le fil 3 a vocation à être enroulé.

Dans ce qui suit l'ensemble support 12 et fil 3 sont communément appelés bobine de fil.

Le support s'étendant autour d'un axe de défilement Y (horizontal sur la figure).

Le support 12 présente une forme annulaire.

Le support 12 est par exemple en carton.

Le dispositif de guirlandage comprend par ailleurs un tube 13 définissant un passage central centré sur l'axe de défilement Y. Ce passage central est de dimensions adaptées pour autoriser un passage du fagot de fibres optiques 2 dans le passage central.

Le support 12 est agencé autour du tube 13, de sorte à être fixe par rapport à ce tube 13. Le support 12 peut toutefois être détaché du tube 13 en le faisant coulisser le long de l'axe Y, par exemple dans le but d'être remplacé par un autre support autour duquel un autre fil est enroulé.

Le dispositif de guirlandage 10 comprend par ailleurs un dispositif de guidage de fil 14, connu de l'état de la technique sous le terme de « cloche ». Ce dispositif de guidage de fil 14 comprend une paroi périphérique 16 s'étendant autour de et à distance du support 12.

Une bobine de fil 3 enroulée autour du support 12 est ainsi confinée agencée entre le support 12 et la paroi périphérique 16.

La paroi périphérique 16 présente une surface radialement intérieure 18, tournée vers l'axe de défilement Y (et donc vers la bobine de fil), et une surface radialement extérieure 20 opposée à la surface radialement intérieure 18.

La paroi périphérique 16 définit un passage radial 22 débouchant dans la surface radialement interne 18 et dans la surface radialement externe 20 qui lui est opposée.

La paroi périphérique 16 présente un bord amont 24 et un bord aval 26 opposé au bord amont 24. La paroi périphérique s'étend parallèlement à l'axe de défilement Y entre le bord amont 24 et le bord aval 26. Le bord aval 26 relie la surface radialement interne 18 à la surface radialement externe 20.

Le dispositif de guidage de fil 14 comprend par ailleurs une pluralité de roulettes 28, 30, 32 montées à rotation sur la paroi périphérique 16, pour guider une portion d'extrémité du fil 3 enroulé autour du support 12 à travers le passage radial 22 vers l'extérieur du dispositif de guirlandage 10, puis vers le bord aval de la paroi périphérique 16.

Dans le mode de réalisation illustré sur la figure 3, trois roulettes 28, 30, 32 ayant cette fonction sont présentes : une première roulette 28 montée à rotation sur la paroi périphérique radialement interne 18, à proximité du passage radial 22, une deuxième roulette 30 montée à rotation sur la paroi périphérique radialement externe 20, également à proximité du passage radial 22, et une troisième roulette 32 montée à rotation sur la paroi périphérique radialement externe 20, située à proximité du bord aval 26. La première roulette 28 et la deuxième roulette 30 forment ensemble un pantin qui permet de réguler une tension exercée sur le fil 3.

Le dispositif de guidage de fil 14 (en particulier la paroi périphérique) est mobile en rotation autour de l'axe de défilement Y, relativement au support 12.

Le dispositif de guirlandage 10 comprend un premier moteur (non-illustré sur la figure 3) agencé pour mettre en rotation le dispositif de guidage de fil 14 autour de l'axe Y, relativement au support 12.

Le dispositif de guirlandage 10 comprend par ailleurs un système de défilement (non-illustré) qui est configuré pour faire défiler le fagot formé par les fibres optiques 2 dans le passage central, le long de l'axe de défilement Y, et selon un sens amont vers l'aval (c'est-à-dire dans un sens allant depuis le bord amont 24 de la paroi périphérique 16 vers le bord aval 26 de la paroi périphérique 16. Le système de défilement comprend typiquement un deuxième moteur, par exemple différent du premier moteur.

Le dispositif de guirlandage 10 est utilisé de la manière suivante pour enrouler le fil 3 autour du fagot de fibres optiques 2.

Le fagot de fibres optiques 2 est agencé dans le passage central, de manière à s'étendre au-delà du bord aval de la paroi périphérique. L'axe longitudinal X des fibres optiques 2 est alors parallèle à l'axe de défilement Y.

Le fil 3 est enroulé autour du support sous la forme d'une bobine. Une portion d'extrémité du fil 3 est passée à travers le passage radial 22 (selon un sens centrifuge) et guidée vers le bord aval 26 de la paroi périphérique, à l'aide des roulettes 28, 30, 32.

La portion d'extrémité du fil 3 est ramenée vers l'axe de défilement Y de manière à toucher le fagot de fibres optiques 2 en une position se trouvant plus en aval que le bord aval 26. La portion du fil 3 suit ainsi une trajectoire en diagonale par rapport à l'axe de défilement Y, entre le bord aval 26 et ladite position. La portion d'extrémité est maintenue contre le fagot à cette position à l'aide de moyens non-illustrés.

Le système de défilement est mis en route, de manière à déplacer le fagot de fibres optiques 2 en translation dans le sens amont vers aval, le long de l'axe de défilement Y, relativement au support 12 et relativement au dispositif de guidage de fil 14.

Dans le même temps, le premier moteur est mis en route, de manière à mettre en rotation le dispositif de guidage de fil 14 relativement au support 12, autour de l'axe de défilement Y, et relativement au fagot de fibres optiques 2.

La combinaison de ces deux mouvements (rotation et défilement) entraîne un dévidage du fil 3 à partir du support 12, et un enroulement du fil 3 ainsi dévidé autour du fagot de fibres optiques 2 en train de défiler vers l'aval.

Lorsque la vitesse de rotation du dispositif de guidage de fil 14 relativement au support 12 est constante, et que la vitesse de défilement du fagot de fibres optiques 2 relativement au support 2 est également constante, le fil 3 est enroulé autour du fagot de fibres optiques 2 selon une trajectoire hélicoïdale.

De préférence, la vitesse de rotation du dispositif de guidage est comprise dans la gamme allant de 6000 tours par minute à 10000 tours par minute.

Ces vitesses sont élevées, et permettent ainsi un enroulement rapide du fil autour du fagot de fibres optiques 2. Du fait de sa masse linéique réduite, le fil 3 est, malgré cette vitesse élevée, peu sensible à la force centrifuge, et peut donc être enroulé de manière précise autour du fagot.

Par ailleurs, la vitesse de défilement du fagot le long de l'axe Y est de préférence comprise dans l'intervalle allant de 60 à 150 mètres par minutes.

Dans le cas de deux fils 3 et 4, le fil 3 est enroulé sur une longueur du fagot de fibres optiques 2 jugée suffisante dans un sens, par exemple en S, et les mêmes étapes sont mises en œuvre pour enrouler le fil 4 autour du fagot de fibres 2 dans l'autre sens en Z. Un même dispositif 10 est utilisé à cette fin, le fil 4 enroulé autour du support 12, est enroulé autour du faisceau dans un sens inversé à celui du fil 3.

Le faisceau 1 de la figure 2 est alors obtenu.

Un câble de communication optique est ensuite fabriqué sur la base de ce faisceau 1 de fibres optiques 2 maintenues ensemble en fagot par les fils 3, 4.

## Revendications

1. Faisceau (1) de fibres optiques comprenant au moins trois fibres optiques (2) agencées de manière non coplanaire pour former ensemble un fagot, et au moins un fil (3, 4) entourant le fagot pour maintenir les fibres optiques (2) les unes par rapport aux autres, **caractérisé en ce que** le fil (3, 4) présente une masse linéique strictement inférieure à 11 tex, et **en ce que** le fil (3, 4) est enroulé autour du fagot avec un pas d'enroulement inférieur ou égal à 30 millimètres.

2. Faisceau (1) de fibres optiques selon la revendication 1, dans lequel le fil s'étend à 360 degrés selon un seul sens de rotation autour du fagot.

3. Faisceau (1) de fibres optiques selon la revendication 1, dans lequel le fil est en contact direct avec le fagot.

4. Faisceau (1) de fibres optiques selon l'une des revendications 1 à 3, dans lequel la masse linéique est inférieure ou égale à 10 tex.

5. Faisceau (1) de fibres optiques selon l'une des revendications 1 à 4, dans lequel le pas d'enroulement est inférieur ou égal à 15 millimètres.

6. Faisceau (1) de fibres optiques selon l'une des revendications 1 à 5, dans lequel le fil (3, 4) est enroulé autour du fagot avec un pas d'enroulement supérieur ou égal à 2 millimètres.

7. Faisceau (1) de fibres optiques selon l'une des revendications 1 à 6, dans lequel le fil (3, 4) comprend une pluralité de filaments non-torsadés.

8. Faisceau (1) de fibres optiques selon l'une des revendications 1 à 7, dans lequel le fil (3, 4) a une résistance à la rupture d'au moins 0,9 Newton.

9. Faisceau (1) de fibres optiques selon l'une des revendications 1 à 8, dans lequel deux fils (3, 4) entourent le fagot pour maintenir les fibres optiques (2) les unes par rapport aux autres, l'un (3) des deux fils étant enroulé à 360 degrés selon une rotation en S autour du fagot, et l'autre fil (4) étant enroulé à 360 degrés selon une rotation en Z autour du fagot.

10. Câble de communication optique comprenant un faisceau (1) de fibres optiques selon l'une des revendications 1 à 9.

11. Procédé d'obtention d'un faisceau (1) de fibres optiques selon l'une des revendications 1 à 9, comprenant une mise en rotation d'un dispositif de guidage de fil (14) par rapport au fagot de fibres optiques (2), de sorte à enrouler le fil (3, 4) autour du fagot à une vitesse de rotation allant de 6000 tours par minute à 10000 tours par minute.

12. Procédé d'obtention d'un faisceau (1) de fibres optiques selon la revendication 11, dans lequel le fagot de fibres optiques (2) est déplacé en translation le long d'un axe (Y) par rapport au dispositif de guidage de fil (14), à une vitesse allant de 60 à 150 mètres par minutes, pendant que le dispositif de guidage (14) tourne par rapport au fagot autour de l'axe (Y).

## Patentansprüche

1. Optisches Faserbündel (1), umfassend mindestens drei optischen Fasern (2), die nicht koplanar eingerichtet sind, um zusammen einen Bund zu bilden, und mindestens einen Draht (3, 4), der den Bund umgibt, um die optischen Fasern (2) relativ zueinander zu halten, **dadurch gekennzeichnet, dass** der Draht (3, 4) eine Linienmasse strikt unter 11 tex aufweist, und dass der Draht (3, 4) um den Bund mit einer Wicklungssteigung von kleiner oder gleich 30 Millimetern gewickelt ist.

2. Optisches Faserbündel (1) nach Anspruch 1, wobei sich der Draht um 360 Grad in einer einzigen Drehrichtung um den Bund erstreckt.

3. Optisches Faserbündel (1) nach Anspruch 1, wobei der Draht in direktem Kontakt mit dem Bund steht.

4. Optisches Faserbündel (1) nach einem der Ansprüche 1 bis 3, wobei die Linienmasse kleiner oder gleich 10 tex ist.

5. Optisches Faserbündel (1) nach einem der Ansprüche 1 bis 4, wobei die Wicklungssteigung kleiner oder gleich 15 Millimeter ist.

6. Optisches Faserbündel (1) nach einem der Ansprüche 1 bis 5, wobei der Draht (3, 4) mit einer Wicklungssteigung von größer oder gleich 2 Millimetern um den Bund gewickelt ist.

7. Optisches Faserbündel (1) nach einem der Ansprüche 1 bis 6, wobei der Draht (3, 4) eine Vielzahl von unverdrillten Filamenten umfasst.

8. Optisches Faserbündel (1) nach einem der Ansprüche 1 bis 7, wobei der Draht (3, 4) eine Bruchfestigkeit von mindestens 0,9 Newton aufweist.

9. Optisches Faserbündel (1) nach einem der Ansprüche 1 bis 8, wobei zwei Drähte (3, 4) den Bund umgeben, um die optischen Fasern (2) relativ zueinander zu halten, wobei einer (3) der beiden Drähte in einer S-förmigen Drehung um 360 Grad um den Bund gewickelt ist und der andere Draht (4) in einer Z-förmigen Drehung um 360 Grad um den Bund gewickelt ist.

10. Optisches Kommunikationskabel, umfassend ein optisches Faserbündel (1) nach einem der Ansprüche 1 bis 9.

11. Verfahren zur Herstellung eines optischen Faserbündels (1) nach einem der Ansprüche 1 bis 9, umfassend das Drehen einer Drahtführungsvorrichtung (14) relativ zu dem Bund optischer Fasern (2), so dass der Draht (3, 4) mit einer Drehzahl von 6000 Umdrehungen pro Minute bis 10000 Umdrehungen pro Minute um den Bund gewickelt wird.

12. Verfahren zur Herstellung eines optischen Faserbündels (1) nach Anspruch 11, wobei der Bund optischer Fasern (2) mit einer Geschwindigkeit von 60 bis 150 Metern pro Minute entlang einer Achse (Y) relativ zu der Drahtführungsvorrichtung (14) translatorisch bewegt wird, während sich die Führungsvorrichtung (14) relativ zu dem Bund um die Achse (Y) dreht.

## Claims

1. A bundle (1) of optical fibres comprising at least three optical fibres (2) arranged in a non-coplanar manner so as to form a bundle together, and at least one thread (3, 4) surrounding the bundle to hold the optical fibres (2) in position relative to one another, **characterised in that** the thread (3, 4) has a linear mass strictly less than 11 tex, and **in that** the thread (3, 4) is wound around the bundle with a winding pitch of 30 millimetres or less.

2. An optical fibre bundle (1) according to claim 1, in which the thread extends 360 degrees in a single direction of rotation around the bundle.

3. An optical fibre bundle (1) according to claim 1, wherein the yarn is in direct contact with the fibre bundle.

4. An optical fibre bundle (1) according to any one of claims 1 to 3, in which the linear mass is 10 tex or less.

5. An optical fibre bundle (1) according to any one of claims 1 to 4, in which the winding pitch is 15 millimetres or less.

6. An optical fibre bundle (1) according to any one of claims 1 to 5, in which the yarn (3, 4) is wound around the bundle with a winding pitch of 2 millimetres or more.

7. An optical fibre bundle (1) according to any one of claims 1 to 6, wherein the thread (3, 4) comprises a plurality of untwisted filaments.

8. An optical fibre bundle (1) according to any one of claims 1 to 7, wherein the strand (3, 4) has a breaking strength of at least 0.9 newtons.

9. An optical fibre bundle (1) according to any one of claims 1 to 8, wherein two strands (3, 4) surround the bundle to hold the optical fibres (2) in position relative to one another, one (3) of the two strands being wound 360 degrees in an S-rotation around the bundle, and the other strand (4) being wound 360 degrees in a Z-rotation around the bundle.

10. An optical communication cable comprising a bundle (1) of optical fibres according to one of claims 1 to 9.

11. A method of producing a bundle (1) of optical fibres according to any one of claims 1 to 9, comprising rotating a wire guide device (14) relative to the bundle of optical fibres (2), so as to wind the wire (3, 4) around the bundle at a rotational speed of between 6,000 revolutions per minute and 10,000 revolutions per minute.

12. A method of producing a bundle (1) of optical fibres according to claim 11, in which the bundle of optical fibres (2) is moved in a translational manner along an axis (Y) relative to the fibre guide (14), at a speed of between 60 and 150 metres per minute, whilst the guide device (14) rotates relative to the bundle about the (Y) axis.
